# EUROPÄISCHE PATENTSCHRIFT

(11) **EP 2 883 021 B1**
(45) Veröffentlichungstag und Bekanntmachung des Hinweises auf die Patenterteilung: **27.05.2020**
(21) Anmeldenummer: 13737133.2
(22) Anmeldetag: 26.06.2013
(51) Int. Cl.: G01F 1/32

(54) **VORTEX-DURCHFLUSSMESSGERÄT**
VORTEX FLOW METER
DEBITMETRE A VORTEX

(30) Priorität: 13.08.2012 DE 102012015887
(43) Veröffentlichungstag der Anmeldung: 17.06.2015
(73) Patentinhaber: KROHNE Messtechnik GmbH, 47058 Duisburg (DE)
(72) Erfinder: BILGIC, Attila, 40880 Ratingen (DE); DEILMANN, Michael, 45257 Essen (DE); GERDING, Michael, 44805 Bochum (DE); MUSCH, Thomas, 44879 Bochum (DE); NEUBURGER, Stephan, 55271 Stadecken-Elsheim (DE)
(74) Vertreter: Gesthuysen Patent- und Rechtsanwälte
(86) Internationale Anmeldenummer: PCT/EP2013/001870
(87) Internationale Veröffentlichungsnummer: WO 2014/026723

(56) Entgegenhaltungen:
- EP-A1- 0 547 577
- DE-A1-102008 054 915
- GB-A- 1 411 246
- GB-A- 2 145 818
- US-A- 3 823 610
- US-A- 4 358 678
- US-A- 4 703 659

## Beschreibung

Die Erfindung betrifft ein Vortex-Durchflussmessgerät gemäß dem Oberbegriff von Patentanspruch 1.

Das Messprinzip von Vortex-Durchflussmessgeräte beruht darauf, dass sich in einem flüssigen oder gasförmigen Medium hinter einem Staukörper, der von dem Medium umströmt wird, eine sog. Kármánsche Wirbelstraße ausbilden kann, die durch sich mit der Strömung fortbewegende, sich vom Staukörper abgelöste Wirbel gebildet ist. Die Frequenz, mit der sich die Wirbel vom Staukörper ablösen, ist von der Strömungsgeschwindigkeit abhängig, wobei dieser Zusammenhang unter gewissen Voraussetzungen nahezu linear ist. Über die Messung der Wirbelfrequenz kann daher die Strömungsgeschwindigkeit des Mediums bestimmt werde, wodurch wiederum - unter zusätzlicher Berücksichtigung von beispielsweise Druck und Temperatur des Mediums - eine Bestimmung des Volumen- und Massedurchflusses möglich ist.

Für die Messung der Wirbelfrequenz findet im Stand der Technik vorzugsweise ein Auslenkkörper Verwendung. Die in der Wirbelstraße auftretenden Wirbel des Mediums führen zu lokalen Druckschwankungen, die sich auf den Auslenkkörper auswirken und von ihm detektiert werden. Bei dem Auslenckörper kann es sich um einen Druckaufnehmer handeln, der beispielsweise mit Piezoelementen realisiert ist oder um kapazitive Drucksensoren, bei denen, wenn auch in geringem Umfang, ein Sensorelement eine Auslenkung erfährt. Wichtig ist lediglich, dass der Auslenkkörper so in der Wirbelstraße angeordnet ist, dass die von dem Staukörper erzeugten Wirbel - zumindest mittelbar - an dem Auslenkkörper vorbeiziehen und damit detektierbar sind. Dazu kann der Auslenkkörper stromabwärts hinter dem Staukörper vorgesehen sein, wobei in diesem Fall Staukörper und Auslenkkörper körperlich getrennt realisiert sind. Der Auslenkkörper kann aber auch der Staukörper selbst oder in dem Staukörper realisiert sein, wenn beispielsweise bei der aus dem Stand der Technik bekannten Lösung mit Druckaufnehmern die Druckaufnehmer über oder in dem Staukörper angeordnet sind und derart über Kanäle die Druckschwankungen der Wirbelstraße mittelbar erfasst werden; in diesem Fall sind Staukörper und Auslenkkörper körperlich in einer Einheit realisiert.

Bei den aus dem Stand der Technik bekannten Methoden zur Erfassung der Bewegung des Auslenkkörpers, bei denen kapazitive oder induktive Effekte genutzt werden, bei denen mit Piezokeramiken gearbeitet wird oder bei denen optische Fasern zur Erfassung der Auslenkung eingesetzt werden, müssen die Auslenkkörper jeweils durch elektrische oder optische Leitungen kontaktiert werden. Diese Leitungen wiederum müssen aus dem mit dem Medium erfüllten Raum durch die Messrohrwandung bzw. das Gehäuse des Vortex-Durchflussmessgeräts in einen mediumfreien Raum, üblicherweise zu einer Auswerteelektronik, geführt werden. Die damit einhergehenden Durchführungen erfordern sehr aufwendige Dichtungen, da - je nach Anwendungsfall - eine hohe Druck- und/oder Temperaturstabilität erreicht werden muss (mehrere 100 bar, mehrere 100 °C).

Die DE 10 2008 054 915 A1 offenbart ein gattungsgemäßes Vortex-Durchflussmessgerät. Dabei ist eine Sensorfahne vorgesehen, die die Druckschwankungen aufnimmt, die mit den Wirbeln einhergehen, die von einem Staukörper erzeugt werden. Die Sensorfahne ist mit einer Sensorhülse verbunden, deren Auslenkungen ein optischer Sensor erfasst. Das Licht wird in einer Ausgestaltung in Richtung eines auf der Sensorhülse befestigten Spiegelelements abgestrahlt.

Bei Vortex-Durchflussmessgeräten gemäß der GB 1 411 246 A werden die Bewegungen eines Körpers im Staukörper und damit im Messrohr selbst für die Vortex-Messungen herangezogen. Die Detektion der Bewegungen kann durch die Auswertung des Unterbrechens oder des Reflektierens eines Licht-, Schall- oder Mikrowellenstrahls realisiert werden.

In der GB 2 145 818 A wird offenbart, dass in einem Vortex-Durchflussmessgerät die Bewegungen eines Stabs innerhalb des Staukörpers optisch über einen mit dem Stab in Verbindung stehenden Reflektor detektiert werden.

Bei dem Vortex-Durchflussmessgerät gemäß der US 4,358,678 ist im Messrohr hinter dem Staukörper für die Messungen ein Fähnchen mit einer optischen Faser verbunden.

In Abhängigkeit von den Prozessbedingungen, z. B. hohe Temperaturen des Messmediums, kann es auch sein, dass manche Sensoren nicht anwendbar sind. So z. B. in dem Fall, dass die Mediumtemperaturen oberhalb des Curie-Punkts liegen, so dass Piezokeramiken nicht einsetzbar sind.

Im Stand der Technik gibt es noch weitere Ausführungen der Sensorik zur Messung der Wirbelfrequenz bzw. der mit den Wirbeln einhergehenden Druckschwankungen.

Die Patentschrift US 3,823,610 offenbart ein Vortex-Durchflussmessgerät, bei dem für die Messung der Wirbelfrequenz die Bewegung einer Kugel in Folge der Druckschwankungen ausgewertet wird.

Die Lehre der Patentschrift US 4,181,020 besteht in dem Vorschlag, hinter dem Staukörper eine drehbar gelagerte Fahne vorzusehen, die sich in Folge der Druckschwankungen bewegt. Ähnlich ist der Aufbau der Offenlegungsschrift WO 92/01208, in der die Bewegungen eines Auslenkkörpers außerhalb des Messrohrs optisch gemessen werden.

Einen Differenzdrucksensor zur Messung der in Folge der Wirbel auftretenden Druckschwankungen beschreibt die Patentschrift US 7,770,469 B2. In dem dortigen Messaufbau ist ein Mikrowellenresonator mit einer elastischen Membran vorgesehen, wobei die Membran auf die Druckschwankungen derartig reagiert, dass sich die Resonanzfrequenz des Resonators ändert.

Um der Problematik, dass durch die Anordnung von Auslenkkörper und Staukörper eine Richtung der Strömung vorgegeben ist, zu entgehen, so dass eine Messung auch bi-direktional möglich ist, lässt sich der Patentschrift US 4,735,094 eine Anordnung entnehmen, in der entlang einer Längsachse des Messrohrs ein Sensor für die Messung der Wirbelfrequenz zwischen zwei Staukörpern angeordnet ist.

Für eine Erhöhung der Messgenauigkeit wird in der Patentschrift US 4,831,883 vorgeschlagen, zwei Staukörper mit zwei Sensoren nebeneinander anzuordnen.

Aufgabe der vorliegenden Erfindung ist es daher, ein Vortex-Durchflussmessgerät vorzuschlagen, das eine Alternative zum Stand der Technik darstellt und vorzugsweise Nachteile der Umsetzungen des Messprinzips des Stands der Technik zu vermeiden sucht.

Die zuvor hergeleitete und dargestellte Aufgabe ist bei dem Vortex-Durchflussmessgerät, von dem die vorliegende Erfindung ausgeht, mit den Merkmalen des Kennzeichnungsteils von Patentanspruch 1 gelöst.

Es ist mindestens eine Elektronikeinheit vorgesehen, die den Auslenkkörper mit elektromagnetischer Strahlung beaufschlagt und von dem Auslenkkörper eine elektromagnetische Strahlung empfängt. Das Vortex-Durchflussmessgerät weist ein Messrohr auf, in dem sich ein Staukörper und ein Auslenkkörper befinden, wobei sich durch das strömende Medium Wirbel hinter dem Staukörper bilden, die sich auf den Auslenkkörper auswirken. Die resultierenden Bewegungen des Auslenkkörpers werden dadurch detektiert und stehen dadurch für die Bestimmung des Durchflusses zur Verfügung, indem mindestens eine Elektronikeinheit - direkt oder indirekt, mittel- oder unmittelbar - den Auslenkkörper mit einer elektromagnetischen Strahlung beaufschlagt und eine solche Strahlung von dem Auslenkkörper empfängt und vorzugsweise in Hinblick auf den Durchfluss weiterverarbeitet bzw. auswertet. Dabei verbleibt gleichsam die mechanische Bewegung des Auslenkkörpers innerhalb des Prozesses und wird durch die elektromagnetische Strahlung abgetastet.

Dabei handelt es sich in einer Ausgestaltung bei der verwendeten elektromagnetischen Strahlung um Strahlung im Mikrowellenbereich, also um Strahlung mit einer Frequenz ungefähr zwischen 1 und 300 GHz bzw. einer Wellenlänge zwischen 30 cm und 1 mm. Insbesondere handelt es sich um Strahlung, die üblicherweise bei Füllstandsmessungen nach dem Radar-Prinzip Anwendung finden.

Die elektromagnetische Strahlung kann je nach Realisierung zumindest teilweise frei in Richtung des Auslenkkörpers abgestrahlt bzw. von dort empfangen werden oder die Strahlung kann über einen Leiter geführt oder darin eingekoppelt werden.

Die folgenden Ausgestaltungen widmen sich der Variante, dass die Strahlung auf einen oder in einen Leiter eingekoppelt und vorzugsweise auch abgegriffen wird. Dabei kann auch eine geführte Variante z. B. mit einer freien Einstrahlung kombiniert werden.

Erfindungsgemäß ist mindestens eine Leitungsvorrichtung vorgesehen, die elektromagnetische Strahlung zum Auslenkkörper hinführt und/oder elektromagnetische Strahlung vom Auslenkkörper abführt. Dementsprechend beaufschlagt die Elektronikeinheit die mindestens eine Leitungsvorrichtung mit elektromagnetischer Strahlung und/oder greift von der mindestens einen Leitungsvorrichtung eine elektromagnetische Strahlung ab. In dieser Ausgestaltung wird die Strahlung beispielsweise entlang der Leitungsvorrichtung geführt bzw. eingekoppelt und/oder ausgekoppelt. In einer weiteren Ausgestaltung wird von der mindestens einen Leitungsvorrichtung mit dem Auslenkkörper und ggf. weiteren Elementen ein Resonator gebildet. Bewegt sich der Auslenkkörper unter Einfluss der Wirbel, so ändert sich beispielsweise der Abstand zwischen dem Auslenkkörper und einem Referenzpunkt, was durch die elektromagnetische Strahlung vermessen wird. Wird alternativ oder ergänzend ein Resonator gebildet, so kann sich ebenfalls über die Bewegung die Resonanzfrequenz ändern, was auch über die von der Elektronikeinheit empfangenen Signale auswertbar ist, letztlich wird dann die Verstimmung des Resonators ausgewertet.

In einer Ausgestaltung ist der Auslenkkörper im Wesentlichen als Membran ausgestaltet, so dass der Auslenkkörper sich deutlich stärker in einer Ebene erstreckt als in seiner Dicke bzw. Höhe. Dabei ist der membranartige Auslenckörper vorzugsweise so relativ zum Staukörper angeordnet, dass die Wirbel sich möglichst auf die größeren Flächen der Membran auswirken.

In einer dazu alternativen Ausgestaltung wird in Transmission gemessen. Dafür wird die mindestens eine Leitungsvorrichtung teilweise in mechanischen Kontakt entlang dem Auslenkkörper geführt. Daher läuft auch die elektromagnetische Strahlung am Auslenkkörper entlang und wird durch die Bewegungen des Auslenkkörpers beeinflusst.

Die mindestens eine Leitungsvorrichtung ist in einer Ausgestaltung zumindest teilweise im Wesentlichen zylindrisch und ist alternativ oder ergänzend im Wesentlichen als - insbesondere dielektrischer - Hohlleiter ausgestaltet. In einer Ausgestaltung ist die mindestens eine Leitungsvorrichtung zumindest teilweise mit einem Füllmedium gefüllt. In einer Ausgestaltung ist die Leitungsvorrichtung zumindest teilweise als zylindrisches (Metall-)Rohr ausgeführt. Ist das Messrohr aus Metall ausgeführt und ist auch die Leitungsvorrichtung und vorzugsweise auch der Auslenkkörper metallisch, so ist in einer Ausgestaltung eine sehr temperaturbeständige und z. B. auch für Hygiene-Anwendungen einsetzbare Anordnung gegeben.

In einer Ausgestaltung wird die mindestens eine Leitungsvorrichtung nicht als Wellenleiter verwendet, sondern sie und der Auslenkkörper bilden gemeinsam -ggf. in Verbindung mit weiteren Elementen - einen Resonator, dessen Eigenschaften, z. B. dessen Resonanzfrequenz abhängig von der Lage bzw. von den Bewegungen des Auslenkkörpers sind.

Als Alternative dazu, dass über die Leitungsvorrichtung ein zusätzliches Element in das Messrohr eingebracht wird, oder als Ergänzung, um die Ankopplung der Leitungsvorrichtung mit der Außenwelt zu realisieren, sieht eine Ausgestaltung vor, dass mindestens ein für elektromagnetische Strahlung zumindest teilweise durchlässiges Fenster vorgesehen ist. Das Fenster befindet sich beispielsweise in der Wandung des Messrohrs. In einer ergänzenden Ausgestaltung sind mehrere Fenster vorgesehen, die für die verwendete elektromagnetische Strahlung zumindest teilweise durchlässig sind. In einer Ausgestaltung weist das Fenster auch eine entsprechende Linse auf. Dabei ist weiterhin vorgesehen, dass die Elektronikeinheit den Auslenkkörper zumindest durch das mindestens eine Fenster mit elektromagnetischer Strahlung beaufschlagt und/oder zumindest durch das mindestens eine Fenster von dem Auslenkkörper eine elektromagnetische Strahlung empfängt. Das Fenster dient folglich für die Ein- und Auskopplung der Strahlung oder ggf. im Wesentlichen nur für die Ein- oder Auskopplung. Ein solches Fenster geht mit einem geschlossenen Messrohr einher, dessen z. B. thermische Isolation entsprechend realisierbar ist. Innerhalb des Messrohrs kann dabei an ein solches Fenster auch eine Leitungsvorrichtung angeschlossen sein.

Erfindungsgemäß findet die Messung in einer Messkammer statt, die mit dem Messrohr druckübertragend verbunden ist und in der sich auch der Auslenckörper befindet. Eine solche Messkammer befindet sich seitlich am Messrohr. In einer Ausgestaltung sind mindestens zwei Leitungsvorrichtungen vorgesehen. Durch die Verwendung von zwei Leitungsvorrichtungen lassen sich beispielsweise die Bewegungen des Auslenkkörpers von zwei unterschiedlichen Seiten messen. Dafür sind beispielsweise die mindestens zwei Leitungsvorrichtungen relativ zum Auslenkkörper einander gegenüberliegend angeordnet. Handelt es sich insbesondere um einen membranartigen Auslenkkörper, so sind die zwei Leitungsvorrichtungen beispielsweise mit der jeweils flächigen Seite - also mit der Ober- und einmal mit der Unterseite - verbunden.

Weiterhin lässt sich - prinzipiell unabhängig von der Art der Ausgestaltung und Anordnung der Leitungsvorrichtungen und ggf. Fenster - über eine Korrelierung der Messdaten die Aussagekraft über die Messung erhöhen und lassen sich dadurch insbesondere auch Störungen bei der Messung identifizieren und ggf. korrigieren.

In einer Ausgestaltung ist mindestens ein Temperaturfühler zum Bestimmen der Temperatur des Medium vorgesehen. Alternativ oder ergänzend ist ein Drucksensor zur Messung des Drucks im Messrohr vorgesehen.

Im Einzelnen gibt es eine Vielzahl von Möglichkeiten, das erfindungsgemäße Vortex-Durchflussmessgerät auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: ein Vortex-Durchflussmessgerät in schematischer Schnittdarstellung in einer ersten Variante,
- Fig. 2: ein Vortex-Durchflussmessgerät in schematischer Schnittdarstellung in einer zweiten Variante,
- Fig. 3: ein Vortex-Durchflussmessgerät in schematischer Schnittdarstellung in einer dritten Variante mit einer Schnittebene senkrecht zu den Ebenen der Schnitte der Fig. 1 und 2,
- Fig. 4: ein Vortex-Durchflussmessgerät in schematischer Schnittdarstellung (mit gleicher Schnittebene wie bei den Fig. 1 und 2) in einer vierten Variante,
- Fig. 5: ein Vortex-Durchflussmessgerät in schematischer Schnittdarstellung in einer fünften Variante,
- Fig. 6: ein Vortex-Durchflussmessgerät in schematischer Schnittdarstellung in einer sechsten Variante,
- Fig. 7: ein Vortex-Durchflussmessgerät in schematischer Schnittdarstellung mit der gleichen Schnittebene wie bei Fig. 3 in einer siebten Variante,
- Fig. 8: ein erfindungsgemäßes Vortex-Durchflussmessgerät in schematischer Schnittdarstellung in einer achten Variante und
- Fig. 9: ein Vortex-Durchflussmessgerät in schematischer Schnittdarstellung in einer neunten Variante .

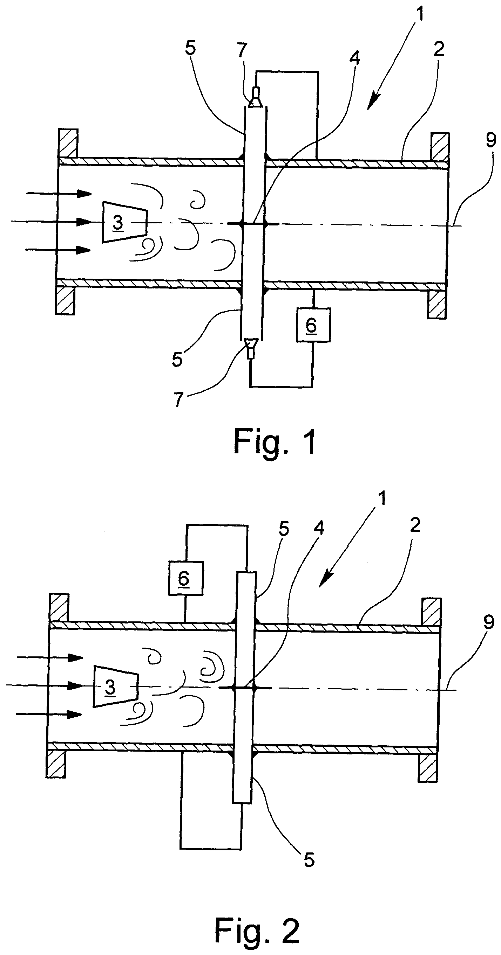

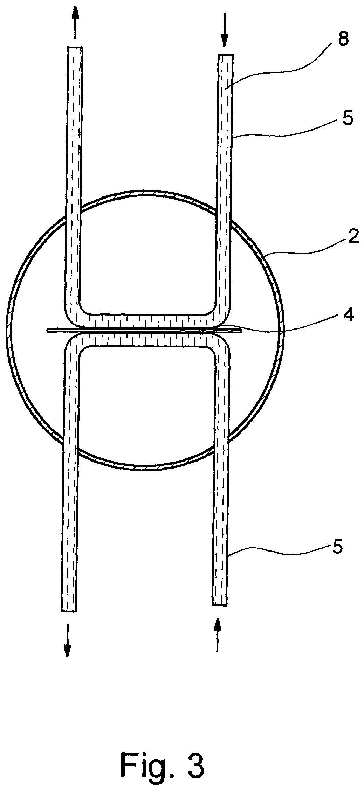

In den Fig. 1, 2 und 4 bis 7 sind Schnittdarstellungen verschiedener Ausführungsbeispiele nicht erfindungsgemäßer Vortex-Durchflussmessgeräte 1 dargestellt. Dabei verläuft die Schnittebene jeweils so, dass die Längsachse 9 des jeweiligen Messrohrs 2 in der Schnittebene liegt. Bei den Ausführungsbeispielen der Fig. 3, 8 und 9 liegt die Schnittebene jeweils senkrecht dazu und die Längsachse 9 steht entsprechend senkrecht auf der Zeichnungsebene.

In der Fig. 1 ist ein Vortex-Durchflussmessgerät 1 dargestellt, dessen Messrohr 2 an seinen Enden jeweils auf einen Flansch mündet, um beispielsweise in ein bestehendes Rohrsystem eingebracht zu werden. Für die Messung des Durchflusses des Mediums durch das Messrohr 2 (dessen Bewegungsrichtung ist durch die Pfeile an der hier zeichnerisch linken Seite angedeutet) ist ein Staukörper 3 vorgesehen, an dem sich durch die Bewegung des Mediums Wirbel bilden. Diese Wirbel wiederum führen zu Druckschwankungen im Medium, die sich hier auf einen - in Richtung des Flusses des Mediums - hinter dem Staukörper 3 angeordneten Auslenkkörper 4 auswirken und ihn dadurch auslenken.

Für eine optimale Messung ist der Auslenkkörper 4 längs der Längsachse 9 des Messrohrs 2 in einem geeigneten Abstand vom Staukörper 3 angeordnet. Bei dem hier membranartigen Auslenkkörper 4 liegt der Auslenkkörper 4 im Wesentlichen in der Ebene, in der die Längsachse 9 befindlich ist.

Der Detektion der Auslenkung bzw. der Lageveränderung des Auslenkkörpers 4 relativ zu einem Referenzpunkt dienen in der dargestellten Ausgestaltung die zwei Leitungsvorrichtungen 5, die hier zeichnerisch ober- bzw. unterhalb des Auslenkkörpers 4 angeordnet sind. Beide Leitungsvorrichtungen 5 sind als Hohlleiter für die elektromagnetische Strahlung vorgesehen, die von der Elektronikeinheit 6 über die Antennen 7 erzeugt und empfangen wird. In einer Variante wird für die Messung der Auslenkung des Auslenkkörpers 4 im Wesentlichen das Radar-Prinzip wie bei der Bestimmung eines Füllstands eines Mediums angewendet, d. h. es wird die Laufzeit der Strahlung ermittelt und daraus wird auf den Abstand geschlossen.

Vorzugsweise wird alternativ die Phasenlage zwischen der ausgesendeten und wieder empfangenen elektromagnetischen Strahlung ermittelt und zur Abstandsbestimmung zwischen dem Sender/Empfänger der Elektronikeinheit 6 und dem Auslenkkörper verwendet, insbesondere kann dazu auch modulierte elektromagnetische Strahlung verwendet werden. Dazu sind mehrere bewährte Verfahren bekannt, beispielsweise das Dauerstrichradar oder das modulierte Dauerstrichradar.

In der gezeigten Ausgestaltung ergeben sich durch die zwei Leitungsvorrichtungen 5 auch zwei Messungen und daher zumindest zwei Sätze von Messdaten, die entsprechend miteinander verknüpft oder ggf. zur Korrektur herangezogen werden.

Zur Vereinfachung und auch für die Übersichtlichkeit der Darstellung ist hier nur eine Elektronikeinheit 6 vorgesehen. Alternativ kann jedoch auch mehr als eine Elektronikeinheit 6 vorgesehen sein.

Angedeutet ist, dass das Messrohr 2, die Leitungsvorrichtungen 5 und der Auslenkkörper 4 jeweils im Wesentlichen aus einem Metall ausgestaltet und daher miteinander verschweißt oder verlötet sind. Die Leitungsvorrichtungen 5 bilden zusammen mit dem Auslenkkörper zwei Messstrecken nach Art jeweils eines Hohlleiters, wobei beide Messstrecken an ihrer gemeinsamen Stoßstelle durch den Auslenkkörper 4 begrenzt sind. Der Auslenkkörper 4 verläuft sowohl innerhalb als auch außerhalb des durch die Leitungsvorrichtung 5 gebildeten Hohlraums. Im Außenraum der Leitungsvorrichtung 5 ist der Auslenkkörper 4 den durch die Wirbel verursachten Druckschwankungen des Mediums ausgesetzt. Diese Druckschwankungen führen zu einer Verformung des Auslenkkörpers 4 nicht nur außerhalb der Leitungsvorrichtung 5, sondern auch innerhalb der Leitungsvorrichtung 5, wo sie dann durch die elektromagnetische Strahlung bzw. durch Auswertung des Laufzeit- und Ausbreitungsverhaltens der elektromagnetischen Strahlung detektierbar ist. Wird der Auslenkkörper 4 innerhalb der Leitungsvorrichtung 5 durch die Druckschwankungen so ausgelenkt, dass sich die eine Messstrecke vergrößert, vermindert sich die andere Messstrecke automatisch um den gleichen Betrag, so dass hier eine Vermessung der Bewegung des Auslenkkörpers 4 im Gegentakt möglich ist.

Die an dem Messrohr 2 befestigte Leitungsvorrichtung 5 dient in den dargestellten Ausführungsbeispielen nicht nur der Führung der elektromagnetischen Strahlung, sie dient vielmehr auch der Fixierung des Auslenkkörpers 4. Gleichzeitig wird über die Leitungsvorrichtung auch eine thermische Entkopplung zur Elektronikeinheit 6 realisiert.

Die Ausgestaltung der Fig. 2 unterscheidet sich darin von der der Fig. 1, dass die Leitungsvorrichtungen 5 jeweils mit dem Auslenkkörper 4 einen Resonator bilden. Dabei sind die Resonatoren jeweils so ausgebildet, dass ihre Eigenschaften (z. B. die Resonanzfrequenz) abhängig ist von der Lage oder Orientierung des Auslenkkörpers 4. Das bedeutet, dass eine Bewegung des Auslenckörpers 4 sich beispielsweise darin äußert, dass eine andere Resonanzfrequenz vorliegt. Die realisierten Resonatoren werden also bei Auslenkung des Auslenkungskörpers 4 verstimmt, wobei die auswertbare Frequenz der Verstimmung das eigentlich interessierende Messsignal darstellt. Die Anwendung eines Resonators, bzw. hier von zwei Resonatoren bringt es mit sich, dass die verwendete elektromagnetische Strahlung schmalbandig ist im Gegensatz zur Hohlwellenleiter-Variante gemäß Fig. 1. Bei beiden Ausgestaltungen sind jedoch die Leitungsvorrichtungen 5 im Wesentlichen senkrecht auf dem Auslenkkörper 4 angebracht.

Die Messungen mit den Ausgestaltungen der Fig. 1 und 2 erfolgen im Wesentlichen und im weitesten Sinne unter Anwendung der Reflexion. Die Ausgestaltung der Fig. 3 benutzt eine Art Transmission durch die Leitungsvorrichtung 5, indem die elektromagnetische Strahlung über die zwei Leitungsvorrichtungen 5 an dem Auslenkkörper 4 entlang geführt werden (hier schematisch durch die Pfeile angedeutet). Der Blick der Fig. 3 verläuft dabei in Richtung der Längsachse des Messrohrs 2. Bei Fig. 3 handelt es sich um eine Prinzipskizze. Die Leitungsvorrichtungen 5 und der Auslenkungskörper 4 müssen mechanisch so ausgelegt sein, dass die in dem Messrohr 2 durch die Wirbel erzeigten Druckschwankungen zu einer hinreichenden Auslenkung von Auslenkungskörper 4 und ggf. der Leitungsvorrichtung 5 führen. Bei dieser auf der Transmission von elektromagnetischer Strahlung durch die Leitungsvorrichtung 5 beruhenden Ausgestaltung ragt der Auslenkungskörper selbst nicht in den durch die Leitungsvorrichtung 5 gebildeten Messhohlraum.

Die Leitungsvorrichtungen 5, die hier mit einem Material 8 gefüllt und damit nicht hohl wie beispielsweise in der Ausgestaltung der Fig. 1 sind, sind im Wesentlichen U-förmig an dem membranförmigen Auslenkkörper 4 entlanggeführt und reagieren entsprechend auf die Bewegungen des Auslenkkörpers 4.

Zu erkennen ist weiterhin, dass ein Kippen des Auslenkkörpers 4 sich jeweils gegenläufig auf die Messungen über die zwei Leitungsvorrichtungen 5 auswirkt. Zudem stellt sich ein relativ stabiler Aufbau ein, wobei die Leitungsvorrichtungen 5 sich bzw. den Auslenkkörper 4 teilweise gegenseitig stützen. In einer alternativen - hier nicht dargestellten - Ausgestaltung ist nur eine Leitungsvorrichtung 5 für die Messung mit der elektromagnetischen Strahlung vorgesehen.

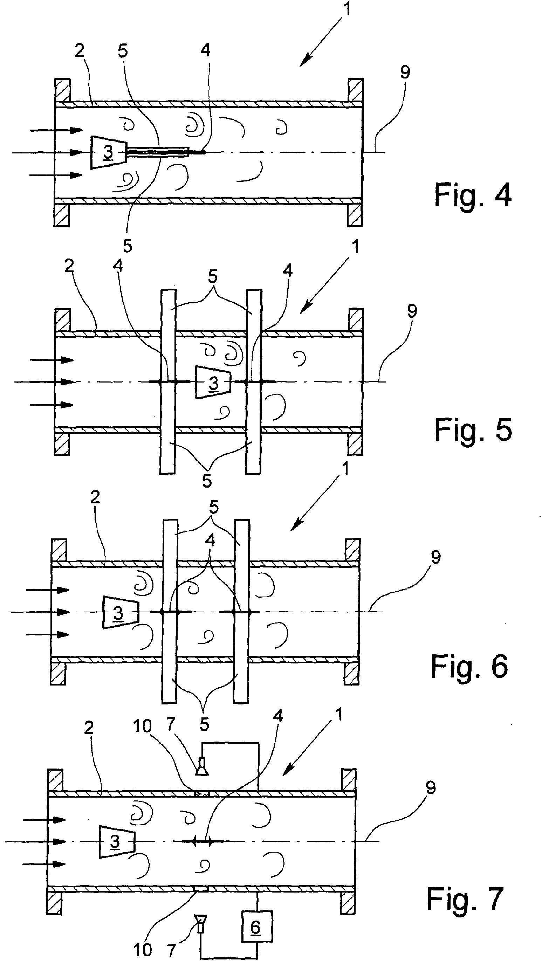

In der Ausgestaltung der Fig. 4 ist der Auslenkkörper 4 direkt am Staukörper 3 angebracht und stellt damit quasi eine Verlängerung davon dar. Weiterhin sind ebenfalls - wie in den vorhergehenden Ausgestaltungen - zwei Leitungsvorrichtungen 5 vorgesehen, die sich hier ebenfalls ober- und unterhalb des membranförmigen Auslenkkörpers 4 befinden.

Nachteilig an der Hintereinanderanordnung von Stau- 3 und Auslenkkörper 4 ist, dass damit eine spezielle Strömungsrichtung des Mediums verbunden ist, da der Auslenkkörper 4 die Wirbel aufnehmen soll, die vom Staukörper 3 erzeugt werden. Daher führt eine Änderung der Strömungsrichtung dazu, dass eine Messung nicht mehr möglich ist.

Für diese Problematik sieht die Ausgestaltung der Fig. 5 vor, dass vor und hinter dem Staukörper 3 jeweils ein Auslenkkörper 4 - hier mit jeweils zwei Leitungsvorrichtungen 5 - vorgesehen ist. Dies erlaubt Messungen unabhängig von der Strömungsrichtung des Mediums bzw. ermöglicht es, aufgrund der Messungen auf die Strömungsrichtung zu schließen. Dafür ist beispielweise der Staukörper 3 so ausgestaltet, dass er für beide Fließrichtungen die für die Messung erforderlichen Wirbel erzeugt. In der Darstellung soll das Medium von links nach rechts fließen, so dass sich auch die angedeuteten Wirbel rechts vom Staukörper 3 befinden.

Unabhängig von der Bestimmung der Strömungsrichtung bzw. einer prinzipiellen Möglichkeit für eine bidirektionale Messung erlauben die hintereinander angeordneten Messanordnungen aus Auslenkkörper 4 und Leitungsvorrichtungen 5 auch die Messungen von Bewegungen oder Schwingungen des Prozesssystems bzw. von Störungen im Fluss des Mediums selbst.

Eine weitere Anordnung, die es erlaubt, durch die Korrelation von Messdaten mehr Informationen zu erhalten, zeigt die Fig. 6, in der zwei Auslenkkörper 4 mit ihren Leitungsvorrichtungen 5 in Richtung der Längsachse 9 hinter dem Staukörper 3 angeordnet sind und dabei beide die erzeugten Wirbel bzw. Druckschwankungen messen bzw. registrieren.

Die Ausgestaltung der Fig. 7 widmet sich einer anderen Variante, in der die elektromagnetische Strahlung der Elektronikeinheit 6 über Fenster 10 in der Wandung des Messrohrs 2 ein- bzw. ausgekoppelt wird. Solche Fenster 10 sind beispielsweise im Bereich der Füllstandsmessung mittels des Radar-Prinzips bekannt. Alternativ kann - hier jedoch nicht dargestellt - ein Fenster mit einer Leitungsvorrichtung wie bei den obigen Ausgestaltungen kombiniert werden.

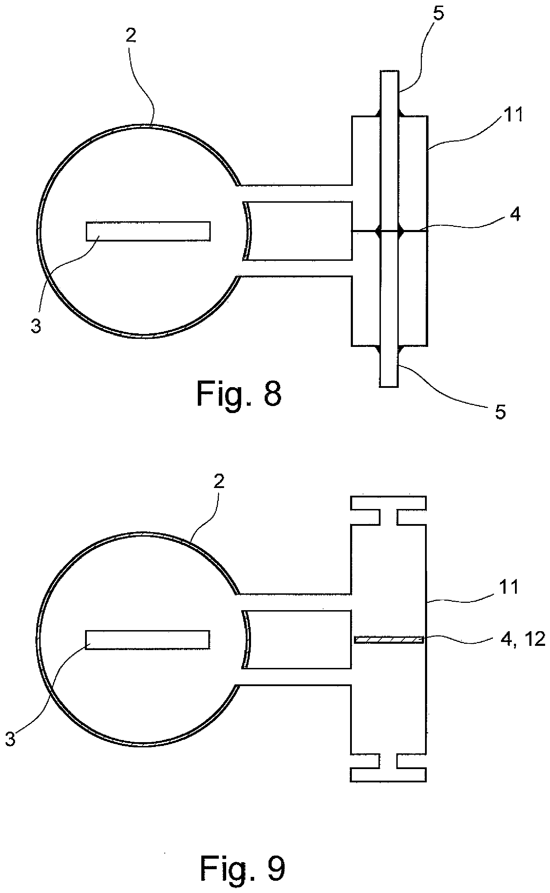

Eine Verlagerung der Messung aus dem Messrohr 2 heraus zeigen die Abbildungen Fig. 8 und 9.

Die Fig. 8 zeigt einen Blick in Richtung der Längsachse des Messrohrs 2. Über zwei Kanäle, die insbesondere der Druckübertragung dienen, ist mit dem Messrohr 2 ein Messraum 11 verbunden, in dem sich der Auslenkkörper 4 befindet. In dem Messrohr 2 werden durch den Staukörper 3 im Medium die Wirbel und Druckschwankungen erzeugt, die in der gezeigten Ausgestaltung im Messraum 11 gemessen werden. Dabei können der Staukörper 3 und der Messraum 11 auf unterschiedlichen axialen Höhen längs der Längsachse des Messrohrs 2 befindlich sein.

Auch in dem Messraum 11 wird der Auslenkkörper 4 bewegt, was über die elektromagnetische Strahlung, die über Leitungsvorrichtungen 5 geführt werden, messbar wird. In den Leitungsvorrichtungen 5 kann dabei ein zum Prozessdruck unterschiedlicher Druck herrschen.

Eine alternative Ausgestaltung, in der der Messraum 11 in sich abgeschlossen ist und vollständig unter dem Prozessdruck steht, zeigt die Fig. 9. In dieser Ausgestaltung erfolgt die Ein- bzw. Auskopplung der elektromagnetischen Signale beispielsweise über - hier nicht dargestellte - Fenster, die sich beispielsweise auf anderen axialen Höhen als der hier dargestellte Schnitt befinden.

Der Auslenkkörper 4 verfügt in dieser Ausgestaltung auch zusätzlich über einen Temperatursensor 12, der eine Bestimmung der Mediumtemperatur erlaubt.

## Patentansprüche

1. Vortex-Durchflussmessgerät (1) mit einem von einem Medium durchströmbaren Messrohr (2), mit mindestens einem Staukörper (3) zur Erzeugung von Wirbeln in dem Medium und mit mindestens einem Auslenkkörper (4), der zumindest in Folge der durch die mit den Wirbeln im Medium einhergehenden Druckschwankungen auslenkbar ist, wobei mindestens eine Elektronikeinheit (6) vorgesehen ist, die den Auslenkkörper (4) mit elektromagnetischer Strahlung beaufschlagt und von dem Auslenkkörper (4) eine elektromagnetische Strahlung empfängt, wobei es sich bei der elektromagnetischen Strahlung um Strahlung im Mikrowellenbereich handelt und dass der Auslenckörper (4) in einer seitlich am Messrohr (2) befindlichen und mit dem Messrohr (2) druckübertragend verbundenen Messkammer (11) angeordnet ist, **dadurch gekennzeichnet,**
**dass** mindestens eine Leitungsvorrichtung (5) vorgesehen ist, die elektromagnetische Strahlung zum Auslenkkörper (4) hinführt und/oder elektromagnetische Strahlung vom Auslenkkörper (4) abführt, und dass die Elektronikeinheit (6) die mindestens eine Leitungsvorrichtung (5) mit elektromagnetischer Strahlung beaufschlagt und/oder von der mindestens einen Leitungsvorrichtung (5) eine elektromagnetische Strahlung abgreift.

2. Vortex-Durchflussmessgerät (1) nach Anspruch 1, **dadurch gekennzeichnet, dass** mindestens zwei Leitungsvorrichtungen (5) vorgesehen sind, und dass die mindestens zwei Leitungsvorrichtungen (5) relativ zum Auslenkkörper (4) einander gegenüberliegend angeordnet sind.

## Claims

1. Vortex flowmeter (1) with a measuring tube (2) through which a medium can flow, with at least one baffle body (3) for generating vortices in the medium and with at least one deflecting body (4) which can be deflected at least as a result of the pressure fluctuations caused by the vortices in the medium, wherein at least one electronic unit (6) is provided, which applies electromagnetic radiation to the deflecting body (4) and receives electromagnetic radiation from the deflecting body (4), wherein the electromagnetic radiation is radiation in the microwave range and that the deflecting body (4) is arranged in a measurement chamber (11) located on the side of the measuring tube (2) and connected to the measuring tube (2) in a pressure-transmitting manner,
**characterized in**
**that** at least one line device (5) is provided, which conducts electromagnetic radiation to the deflecting body (4) and/or carries electromagnetic radiation away from the deflecting body (4), and in that the electronic unit (6) applies electromagnetic radiation to the at least one line device (5) and/or taps electromagnetic radiation from the at least one line device (5).

2. Vortex flowmeter (1) according to claim 1, **characterized in that** at least two line devices (5) are provided, and that the at least two line devices (5) are arranged opposite one another relative to the deflecting body (4).

## Revendications

1. Débitmètre à vortex (1) comprenant un tube de mesure (2) pouvant être parcouru par un fluide, au moins un corps d'obstruction (3) pour générer des tourbillons dans le fluide et au moins un corps déflecteur (4) qui peut être dévié au moins suite aux variations de pression associées aux tourbillons dans le fluide, au moins une unité électronique (6) étant prévue, laquelle sollicite le corps déflecteur (4) avec un rayonnement électromagnétique et reçoit un rayonnement électromagnétique depuis le corps déflecteur (4), le rayonnement électromagnétique étant un rayonnement dans la plage des micro-ondes et le corps déflecteur (4) étant disposé dans une chambre de mesure (11) se trouvant latéralement au niveau du tube de mesure (2) et connectée au tube de mesure (2) avec transmission de la pression,
**caractérisé en ce**
**qu'**au moins un dispositif de conduite (5) est prévu, lequel conduit le rayonnement électromagnétique vers le corps déflecteur (4) et/ou évacue le rayonnement électromagnétique depuis le corps déflecteur (4), et **en ce que** l'unité électronique (6) sollicite l'au moins un dispositif de conduite (5) avec un rayonnement électromagnétique et/ou capte un rayonnement électromagnétique depuis l'au moins un dispositif de conduite (5).

2. Débitmètre à vortex (1) selon la revendication 1, **caractérisé en ce qu'**au moins deux dispositifs de conduite (5) sont prévus et **en ce que** les au moins deux dispositifs de conduite (5) sont disposés en face l'un de l'autre par rapport au corps déflecteur (4).
